(19) Europäisches Patentamt / European Patent Office / Office européen des brevets

(11) **EP 2 188 954 B1**

(12) **FASCICULE DE BREVET EUROPEEN**

(45) Date de publication et mention
de la délivrance du brevet:
**16.03.2011 Bulletin 2011/11**

(21) Numéro de dépôt: **08803527.4**

(22) Date de dépôt: **02.09.2008**

(51) Int Cl.:
***H04L 12/46*** *(2006.01)*

(86) Numéro de dépôt international:
**PCT/EP2008/061556**

(87) Numéro de publication internationale:
**WO 2009/030681 (12.03.2009 Gazette 2009/11)**

(54) **MÉTHODE DE TRANSMISSION DE MESSAGES ACARS SUR IP.**

VERFAHREN ZUR ÜBERTRAGUNG VON ACARS-NACHRICHTEN AUF IP

METHOD FOR TRANSMITTING ACARS MESSAGES ON IP

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **03.09.2007 FR 0757311**

(43) Date de publication de la demande:
**26.05.2010 Bulletin 2010/21**

(73) Titulaire: **AIRBUS OPERATIONS
31060 Toulouse (FR)**

(72) Inventeurs:
  • **GRUYER, Pierre**
    **F-31100 Toulouse (FR)**
  • **DURAND, Frédéric**
    **F-31300 Toulouse (FR)**
  • **CHAUMETTE, Pascal**
    **F-31700 Blagnac (FR)**
  • **RUTSCHLE, Yves**
    **F-31650 Saint-Orens (FR)**

(74) Mandataire: **Ilgart, Jean-Christophe
BREVALEX
95 rue d'Amsterdam
75378 Paris Cedex 8 (FR)**

(56) Documents cités:
  **WO-A-2006/026632      GB-A- 2 433 006
  US-A1- 2001 055 312     US-B1- 6 785 301**

  • **HIERTZ G R ET AL: "The evolution of wireless
    LANs and PANs - Analysis of IEEE 802.11 E for
    qos support in wireless lans" IEEE PERSONAL
    COMMUNICATIONS, IEEE COMMUNICATIONS
    SOCIETY, US, vol. 10, no. 6, décembre 2003
    (2003-12), pages 40-50, XP011107079 ISSN:
    1070-9916**

## Description

## DOMAINE TECHNIQUE

La présente invention concerne de manière générale le domaine des télécommunications aéronautiques et plus particulièrement celui de la transmission de messages ACARS (*Aircraft Communication and Reporting System*)*.

## ÉTAT DE LA TECHNIQUE ANTÉRIEURE

Dans le domaine aéronautique, le système ACARS permet de transmettre des données entre un aéronef et une station au sol, notamment d'échanger des informations de type AOC (*Aeronautical Operational Control*) avec les opérateurs de compagnies aériennes ou des informations de type ATC (*Air Traffic Control*) avec les contrôleurs aériens. La liaison de données entre bord et sol est généralement désignée par le terme générique de « datalink ».

Le système ACARS peut utiliser plusieurs supports de transmission (appelés aussi média dans l'état de la technique), ou plus exactement plusieurs types de sous-réseau pour transmettre les données, à savoir des sous-réseaux HF, VHF ou SATCOM. Le sous-réseau de télécommunication VHF permet des liaisons point à point en ligne de visée directe avec des émetteurs/ récepteurs au sol mais avec une portée relativement réduite. Le sous-réseau de télécommunication satellitaire SATCOM fournit par contre une couverture mondiale, à l'exception des zones polaires, mais avec des coûts de communication élevés. Le sous-réseau HF permet quant à lui de couvrir les zones polaires.

Généralement, la transmission de données au sol se fait au moyen d'un module de télécommunication embarqué ou CMU (*Communications Management Unit*) qui sélectionne automatiquement le support de transmission (VHF, HF, SATCOM) le mieux approprié en fonction d'un certain nombre de paramètres.

Les supports de communication précités commencent toutefois à atteindre leurs limites en termes de disponibilité d'accès, alors même que les communications avec le sol requièrent des débits de plus en plus élevés. En outre, les coûts de communication qu'entraînent des volumes de plus en plus importants de données à transmettre, grèvent les budgets des compagnies aériennes.

Pour remédier à cette situation, certains acteurs du domaine aéronautique ont proposé d'utiliser des supports de transmission grand public pour transmettre les messages ACARS. Ainsi, lorsque l'aéronef stationne à la porte d'embarquement, se trouve au sol voire en phase d'approche, il peut établir une connexion avec le centre de contrôle aérien ou le centre opérationnel de la compagnie aérienne, via le réseau GPRS, une borne Wi-Fi ou une station Wi-Max. La transmission des messages ACARS se fait alors en les encapsulant dans des datagrammes IP comme décrit par exemple dans la demande internationale WO2006/026632. On parle alors d'ACARS sur IP ou de AoIP (ACARS over IP).

L'échange de messages ACARS entre un aéronef et la centre opérationnel de la compagnie aérienne doit se conformer à la norme ARINC 618, indépendamment du fait que ces messages soient ou non encapsulés dans des datagrammes IP. Le protocole ARINC 618 impose de segmenter les messages ACARS en blocs élémentaires de 220 caractères utiles et de ne transmettre un nouveau bloc qu'après avoir reçu un accusé de réception du bloc précédent. Ce mécanisme d'acquittement « stop and wait » a le mérite d'offrir une grande robustesse mais se prête mal à une transmission sur IP, comme nous le verrons ci-après.

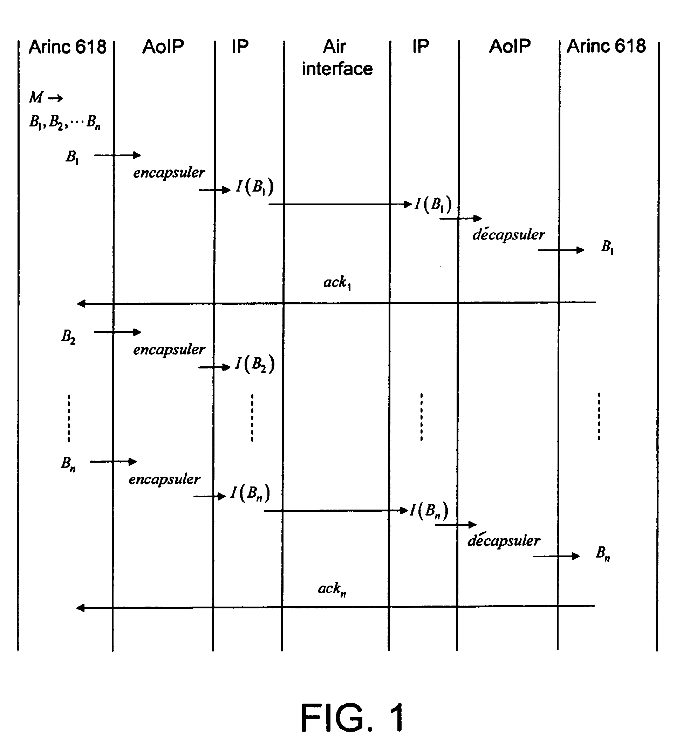

Fig. 1 illustre de manière schématique une transmission de messages ACARS sur IP entre un émetteur (par exemple un aéronef) et un récepteur (par exemple la base d'une compagnie aérienne).

On a représenté sur la figure, tant du côté émetteur que du côté récepteur les couches applicatives Arinc 618, les couches d'adaptation notées AoIP permettant l'adaptation à la couche IP, les couches IP. On a également représenté l'interface air entre l'aéronef et la station au sol relayant les messages vers le centre de la compagnie aérienne.

Le message ACARS $M$ est segmenté au maximum en $n$ blocs $B_1, B_2, ..., B_n$, avec $n \leq 16$, chaque bloc contenant au maximum 220 caractères utiles. Cette segmentation est effectuée par la couche Arinc 618 de l'émetteur. Le premier bloc $B_1$ est tout d'abord encapsulé, par la couche AoIP dans un datagramme IP, noté $I(B_1)$ avant d'être transmis sur l'interface air. Le datagramme est reçu par une station au sol et est routé à travers le réseau Internet jusqu'à l'adresse IP du destinataire. Le bloc $B_1$ est décapsulé du datagramme $I(B_1)$ par la couche AoIP et transmis à la couche Arinc 618. Après vérification de son intégrité la couche Arinc 618 transmet un message d'acquittement $ack_1$ (ou accusé de réception, les deux expressions étant employées indifféremment) qui est lui-même encapsulé dans un datagramme IP par la couche AoIP. Le message d'acquittement est reçu par l'aéronef, décapsulé par la couche AoIP puis transmis à la couche Arinc 618. Cette couche peut alors émettre le second bloc $B_2$. Le processus est répété pour chaque bloc du message.

On comprend que le mécanisme d'acquittement induit par la couche Arinc 618 pénalise sévèrement le débit de transmission des messages ACARS.

Le but de la présente invention est par conséquent de proposer un protocole de transmission de messages ACARS sur IP qui ne souffre pas de ces limitations de débit, sans pour autant sacrifier la sécurité de la transmission.

## EXPOSÉ DE L'INVENTION

La présente invention est définie par une méthode de transmission de messages ACARS sur IP, entre un émetteur et un récepteur, un message ACARS émis par une application étant divisé en une pluralité de blocs, dans laquelle, pour chaque bloc dudit message, à l'exception du dernier, on renvoie localement, au niveau de l'émetteur, un accusé de réception factice dudit bloc à ladite application et, lorsque l'émetteur reçoit du récepteur un message, indiquant une bonne réception de ladite pluralité des blocs transmis, il génère un accusé de réception du dernier bloc avant de le renvoyer à ladite application.

Typiquement, ladite application comprend une couche de protocole Arinc 618, ledit message ACARS est conforme à cette norme et l'accusé de réception est transmis à cette couche.

Selon un premier mode de réalisation, l'émetteur comprend une couche d'adaptation de protocole, dite première couche d'adaptation, entre la couche de protocole Arinc 618 et la couche IP, ladite première couche d'adaptation renvoyant pour chaque bloc d'un message ACARS, à l'exception du dernier, un acquittement factice à la couche de protocole Arinc 618, et lorsqu'elle a reçu de cette couche la totalité des blocs dudit message, les concatène et encapsule les blocs ainsi concaténés dans un premier datagramme IP.

De manière symétrique, le récepteur comprend une couche d'adaptation de protocole, dite seconde couche d'adaptation, entre la couche de protocole Arinc 618 d'une seconde application et la couche IP, ladite seconde couche d'adaptation étant adaptée à décapsuler et segmenter la charge utile dudit datagramme IP pour récupérer lesdits blocs, puis à fournir les blocs, un par un, à la couche de protocole Arinc 618 de ladite seconde application, un bloc ne lui étant fourni que lorsqu'elle a accusé réception du bloc précédent.

De préférence, lorsque la seconde couche d'adaptation a reçu la totalité des accusés de réception desdits blocs, elle renvoie à l'émetteur, dans un second datagramme IP , un accusé de réception de la pluralité desdits blocs.

Selon un second mode de réalisation, l'émetteur comprend une couche d'adaptation de protocole, dite troisième couche d'adaptation, entre la couche de protocole Arinc 618 et une couche TCP sur IP, ladite troisième couche d'adaptation renvoyant pour chaque bloc d'un message ACARS, à l'exception du dernier, un acquittement factice à la couche de protocole Arinc 618, et lorsqu'elle a reçu de cette couche la totalité des blocs dudit message, les concatène et encapsule les blocs ainsi concaténés dans un premier segment TCP.

Avantageusement, le récepteur comprend une couche d'adaptation de protocole, dite quatrième couche d'adaptation, entre la couche de protocole Arinc 618 d'une seconde application et la couche TCP, ladite quatrième couche d'adaptation étant adaptée à décapsuler et segmenter la charge utile dudit premier segment TCP pour récupérer lesdits blocs, puis à fournir les blocs, un par un, à la couche de protocole Arinc 618 de la seconde application, un bloc ne lui étant fourni que lorsqu'elle a accusé réception du bloc précédent.

De préférence, lorsque la quatrième couche d'adaptation a reçu la totalité des accusés de réception desdits blocs, elle renvoie à l'émetteur, un second segment TCP, contenant un accusé de réception de la pluralité desdits blocs ainsi qu'un acquittement du premier segment TCP.

Selon un troisième mode de réalisation, l'émetteur comprend une couche d'adaptation de protocole, dite cinquième couche d'adaptation, entre la couche de protocole Arinc 618 et une couche UDP sur IP, ladite cinquième couche d'adaptation renvoyant pour chaque bloc d'un message ACARS, à l'exception du dernier, un acquittement factice à la couche de protocole Arinc 618, et lorsqu'elle a reçu de cette couche la totalité des blocs dudit message, les concatène et encapsule les blocs ainsi concaténés dans un premier datagramme UDP.

Avantageusement, le récepteur comprend une couche d'adaptation de protocole, dite sixième couche d'adaptation, entre la couche de protocole Arinc 618 d'une seconde application et la couche UDP, ladite sixième couche d'adaptation étant adaptée à décapsuler et segmenter la charge utile dudit premier datagramme UDP pour récupérer lesdits blocs, puis à fournir les blocs, un par un, à la couche de protocole Arinc 618 de la seconde application , un bloc ne lui étant fourni que lorsqu'elle a accusé réception du bloc précédent et en ce que, lorsque la sixième couche d'adaptation a reçu la totalité des accusés de réception desdits blocs, elle attend l'envoi d'un second message ACARS à destination de l'émetteur, l'accusé de réception de la pluralité desdits blocs étant alors concaténé aux blocs du second message avant d'être placé dans un second datagramme UDP.

## BRÈVE DESCRIPTION DES DESSINS

D'autres caractéristiques et avantages de l'invention apparaîtront à la lecture d'un mode de réalisation préférentiel de l'invention en référence aux figures jointes parmi lesquelles :

La Fig. 1 illustre schématiquement un protocole de transmission de messages ACARS sur IP connu de l'état de la technique ;
La Fig. 2 représente un système de transmission de messages ACARS sur IP susceptible d'implémenter la méthode de transmission selon l'invention ;
La Fig. 3 illustre schématiquement une méthode de transmission de messages ACARS sur IP selon un mode de réalisation de l'invention ;
Les Fig. 4A et 4B illustrent respectivement une méthode de transmission de messages ACARS sur IP selon une première et une seconde variantes du mode de réalisation de l'invention ;
La Fig. 5 illustre une méthode de transmission de messages ACARS sur IP selon une troisième variante du mode de réalisation de l'invention.

## EXPOSÉ DÉTAILLÉ DE MODES DE RÉALISATION PARTICULIERS

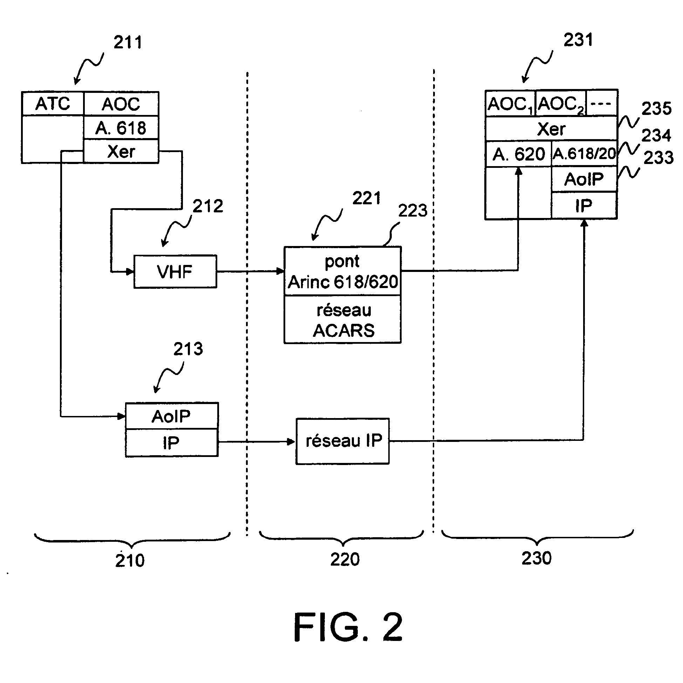

Nous considérerons à nouveau un système d'émission/réception de messages ACARS sur IP. Afin de permettre une meilleure compréhension de l'invention, un exemple de réalisation d'un tel système a été illustré en Fig. 2. L'homme du métier comprendra toutefois que cet exemple de réalisation n'est qu'indicatif et non limitatif, l'invention étant susceptible de s'appliquer à un système de transmission de messages AoIP d'architecture quelconque.

Le système ACARS sur IP est divisé en trois segments : un segment embarqué 210, un segment de réseau au sol, 220, et un segment propre au centre de la compagnie aérienne, 230.

Le segment embarqué comprend un module avionique CMU (*Communications Management Unit*), 211, dont on a schématiquement représenté la structure en termes de couches de protocole.

Le module CMU héberge des applications AOC et ATC dédiées respectivement à l'échange de données avec le centre de la compagnie aérienne et avec le centre de contrôle aérien. Les données de types AOC sont transmises au moyen de messages ACARS via la couche de protocole Arinc 618. Ces messages peuvent être envoyés soit vers un support de transmission conventionnel, 212, par exemple un émetteur VHF, HF ou SATCOM, soit vers un premier module de conversion 213, inclus ou non dans le CMU. Ce module de conversion utilise une couche d'adaptation de protocole, notée AoIP, entre la couche de protocole Arinc 618 de l'application et la couche IP, comme détaillé plus loin.

Lorsqu'un support de transmission conventionnel est sélectionné, les messages sont transmis à une station au sol du réseau ACARS. Cette station, 221, est équipée d'une passerelle 223, réalisant une conversion du protocole Arinc 618 en protocole Arinc 620. On rappelle que la norme Arinc 620 est relative à un protocole de transmission au sol de messages ACARS, par exemple entre un fournisseur de service (DSP) et un centre opérationnel de compagnie aérienne.

Si la transmission sur IP est sélectionnée, les messages ACARS sont envoyés à la passerelle 213. Les datagrammes IP contenant les messages ACARS sont routés via le réseau Internet jusqu'à l'adresse IP du destinataire. La liaison entre l'aéronef et le sol se fait via une infrastructure de télécommunication grand public par exemple le réseau GPRS, une borne Wi-Fi, une station WiMax.

Le segment de la compagnie aérienne comprend un terminal 231, terminal comprenant, d'une part, une couche de protocole Arinc 620 adaptée à recevoir des messages ACARS ayant transité par la passerelle de conversion, c'est-à-dire via le support de transmission conventionnel et, d'autre part, une couche de protocole adaptée à recevoir les messages ACARS ayant transité via le réseau IP. Plus précisément, le terminal 231 comprend un second module de conversion, 233, appartenant à la couche d'adaptation AoIP, chargée de décapsuler les blocs et de les transmettre à la couche ACARS 618 et une couche d'adaptation de protocole ACARS 618/ 620, référencée en 234. Un multiplexeur, 235, aiguille les messages ACARS selon la norme Arinc 620 vers les ports des applications de contrôle $AOC_1,...,AOC_N$ hébergées par le terminal 231.

L'invention concerne les premier et second modules de conversion de la couche AoIP. Le principe général est d'embarquer l'ensemble des blocs d'un message dans un seul datagramme IP, de simuler localement, de manière factice, les acquittements des blocs d'un message ACARS à l'exception de celui du dernier bloc qui vaut alors acquittement pour l'ensemble des blocs du message.

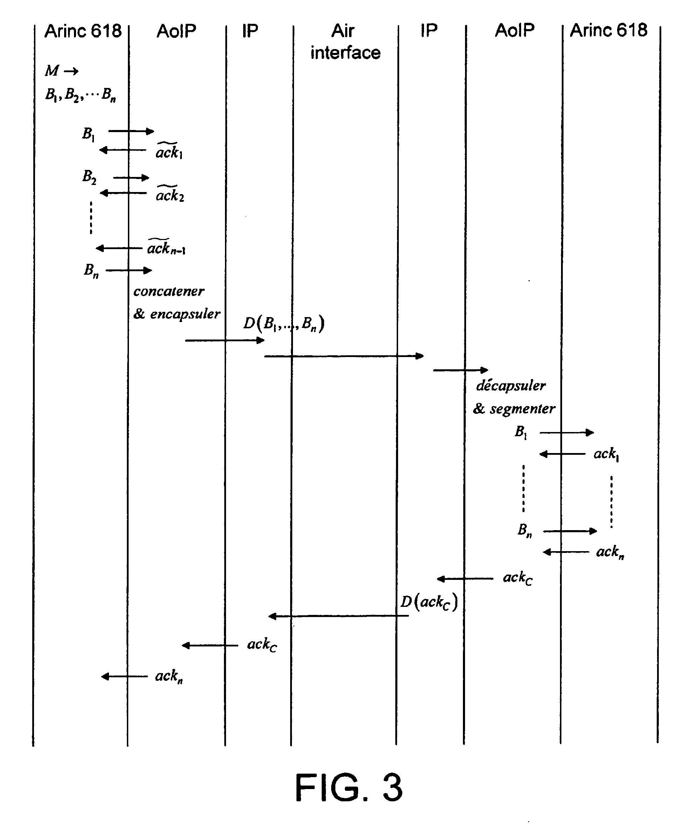

Plus précisément, la Fig. 3 représente une méthode de transmission de messages ACARS sur IP, selon un premier mode de réalisation de l'invention.

On a représenté a nouveau les couches applicatives Arinc 618, les couches d'adaptation AoIP, les couches IP pour le segment embarqué 310 et le segment au sol 320. La liaison entre le segment embarqué et le segment au sol se fait par une interface air et emprunte avantageusement une infrastructure de télécommunication grand public.

Lorsqu'un message ACARS *M* est à transmettre par une application hébergée par l'émetteur, par exemple le CMU, ce message est segmenté en *n* blocs $B_1,...,B_n$ par la couche Arinc 618. On notera que l'invention n'est pas restreinte à un nombre donné de blocs, bien que dans l'état actuel de la norme, $n \leq 16$.

Le premier bloc $B_1$ est transmis à la couche AoIP qui renvoie alors un acquittement factice

$$\widetilde{ack}_1 ,$$

ce qui permet à la couche Arinc de transmettre le second bloc $B_2$. Le processus est itéré jusqu'à la transmission de l'avant-dernier bloc $B_{n-1}$. Lorsque la couche Arinc 618 reçoit l'acquittement factice $\widetilde{ack}_{n-1} ,$ elle transmet le dernier bloc $B_n$. Toutefois, pour le dernier bloc, aucun acquittement factice n'est renvoyé. Les n blocs du message sont alors concaténés pour former un bloc composite qui est encapsulé dans un seul datagramme IP, noté $D(B_1,...,B_n)$. Ce datagramme est ensuite routé jusqu'à son adresse IP de destination. On comprendra que la couche IP du segment 320 correspond à un routage classique sur Internet.

A l'adresse IP de destination c'est-à-dire, en pratique, au niveau du centre de la compagnie aérienne, la couche AoIP décapsule le bloc composite du datagramme IP, avant de le segmenter pour récupérer les blocs $B_1,...,B_n$. Le premier bloc $B_1$ est ensuite transmis

à la couche applicative Arinc 618 qui vérifie alors son intégrité, et en cas de bonne réception, renvoie un acquittement $ack_1$ à la couche AoIP. Le processus est répété successivement pour chaque bloc. Le message ACARS $M$ est reconstitué par la couche Arinc 618 de l'application destinatrice (par exemple une application du type AOC) à partir des blocs $B_1,...,B_n$.

Lorsque la couche AoIP reçoit le dernier acquittement $ack_n$, à condition d'avoir néanmoins préalablement reçu les n-1 acquittements des blocs précédents, elle transmet un message d'acquittement composite $ack_C$ signifiant la bonne réception des n blocs. Le message $ack_C$ peut simplement résulter de la concaténation des messages d'acquittement élémentaire $ack_1,..,ack_n$. Ce message est ensuite embarqué dans un datagramme IP, $D(ack_C)$, avant d'être routé vers l'adresse IP du module CMU de l'aéronef.

La couche AoIP du CMU récupère le message d'acquittement $ack_C$ et le convertit en un message d'acquittement du dernier bloc, $ack_n$, avant de le transmettre à la couche Arinc 618. La conversion de $ack_C$ en $ack_n$ peut simplement résulter de la troncation du message composite. Lorsque la couche Arinc 618 reçoit le dernier acquittement, $ack_n$, elle considère que le message M a bien été reçu par le destinataire.

Si l'un des blocs $B_1,...,B_n$ est corrompu ou n'est pas reçu par le destinataire, le message d'acquittement $ack_C$ n'est pas envoyé, et par suite le message $ack_n$ n'est pas transmis à la couche Arinc 618. Cette couche peut alors décider, après un temps d'attente prédéterminé, de renvoyer le message $M$, c'est-à-dire l'ensemble des blocs $B_1,...,B_n$.

On a envisagé dans ce qui précède que l'émetteur du message ACARS était le CMU de l'aéronef et le récepteur le centre de la compagnie aérienne, autrement dit que la communication était descendante (downlink). Il est clair toutefois que la méthode s'applique de manière équivalente à la communication montante (uplink) sans que l'on sorte pour autant du cadre de l'invention.

On comprendra que la méthode de transmission de messages ACARS selon ce mode de réalisation est avantageuse en ce qu'elle permet de ne pas attendre l'acquittement réel d'un bloc avant de transmettre le suivant. En outre, on notera qu'un seul datagramme IP est transmis au lieu de $n$ pour transmettre le message, ce qui réduit d'autant le trafic sur l'interface air et, le cas échéant, les coûts de transmission.

Le mode de réalisation de l'invention décrit précédemment fait abstraction du protocole de transport sous-jacent utilisé, notamment du fait qu'il soit orienté connexion, comme TCP, ou non orienté connexion, comme UDP.

Nous envisagerons les deux situations successivement ci-après.

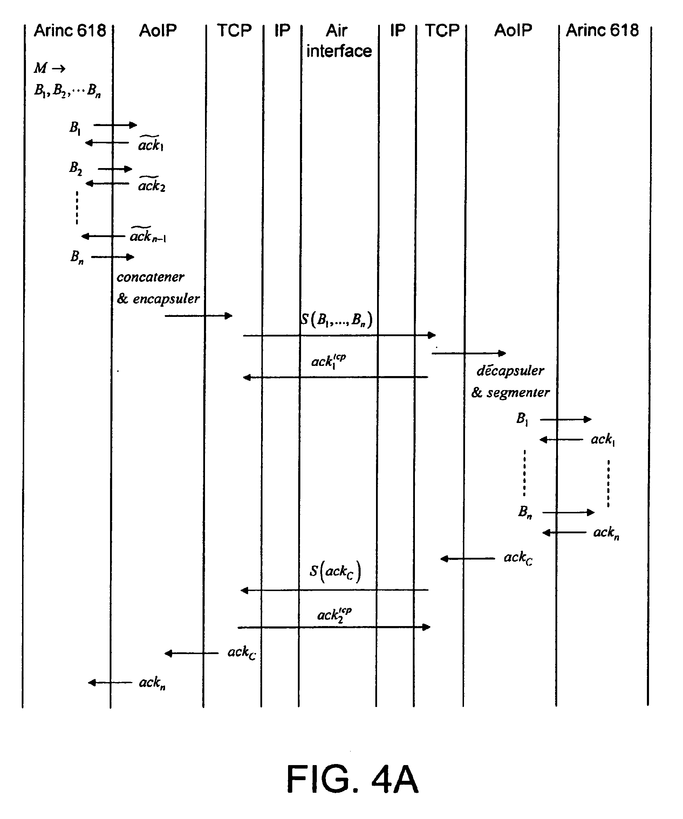

La Fig. 4A illustre une première variante où la méthode de transmission des messages ACARS utilise le protocole de transport TCP classique. On a détaillé la pile de protocole TCP/IP du côté émetteur et du côté récepteur. On sait que la couche TCP établit et maintient une connexion entre l'émetteur et le destinataire, et qu'elle utilise son propre mécanisme d'acquittement pour garantir la bonne réception des datagrammes TCP.

Cette variante ne requiert pas de modification de la couche de transport TCP et par conséquent la couche notée AoIP réalise en fait une adaptation de la couche applicative Arinc 618 à la couche de transport TCP. Plus précisément, les blocs $B_1,...,B_n$ délivrés par la couche Arinc 618, selon le mécanisme d'acquittement factice déjà décrit, sont concaténés et encapsulés dans un segment TCP. Une fois la connexion TCP établie, le segment TCP, noté $S(B_1,...,B_n)$ est transmis au socket TCP du destinataire. Bien entendu, la transmission du segment TCP passe par l'incorporation dans un datagramme IP de manière connue de l'homme du métier.

Lorsque le segment TCP est reçu par le socket TCP du destinataire, un accusé de réception, $ack_1^{tcp}$ est renvoyé à l'émetteur, comme le prévoit le protocole TCP. La remise des blocs de la couche AoIP à la couche Arinc 618 a déjà été décrite en relation avec la Fig. 2 et ne sera pas reprise ici.

Lorsque la couche AoIP a reçu les accusés de réception $ack_1$ à $ack_n$ de la couche Arinc 618, elle transmet un accusé de réception composite $ack_C$ à la couche TCP, qui elle-même le transmet sous la forme d'un segment TCP, noté $S(ack_C)$, au socket TCP de l'émetteur. Sur réception du segment $S(ack_C)$ par la couche TCP du CMU, un accusé de réception, noté $ack_2^{tcp}$ est alors renvoyé au sol, conformément au protocole TCP. L'accusé de réception est ensuite converti en message d'acquittement de dernier bloc, $ack_n$, comme déjà décrit.

Cette variante permet une implémentation directe du mode de réalisation de la Fig. 3 sur une pile de protocole TCP/IP existante.

Toutefois, on notera qu'elle requiert la transmission de quatre segments TCP sur l'interface air, soit $S(B_1,...,B_n)$, $ack_1^{tcp}$, $S(ack_C)$ et $ack_2^{tcp}$.

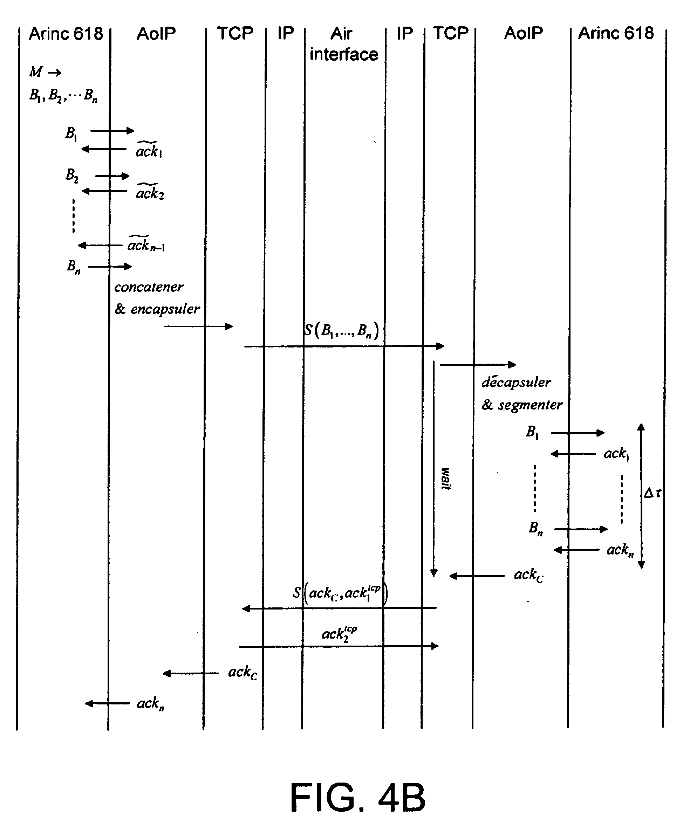

La Fig. 4B illustre une seconde variante du mode de réalisation précédemment décrit. Cette seconde variante permet de réduire le nombre de segments TCP transitant par l'interface air.

Plus précisément, la seconde variante diffère de la première en ce que l'acquittement $ack_1^{tcp}$ n'est pas transmis de manière indépendante. Cette seconde variante peut être réalisée en retardant l'émission de l'accusé de réception de $S(B_1,...,B_n)$ jusqu'à ce que la couche TCP ait elle-même reçu l'acquittement composite $ack_C$ de la couche AoIP, ou bien en s'assurant que le temps de traitement $\Delta\tau$ des blocs $B_1,...,B_n$ par la couche Arinc 618, dans le pire cas où $n$=16, soit inférieur au délai de génération de l'accusé de réception. Le temps de traitement $\Delta\tau$ peut être réduit par un choix convenable du processeur, par un algorithme de compression plus efficace (réduisant donc le nombre et la taille des blocs), ou encore un algorithme de contrôle d'erreur plus rapide.

Dans tous les cas, l'acquittement composite $ack_C$ est transmis avec l'accusé de réception de $S(B_1,...,B_n)$ dans un segment TCP unique, noté $S(ack_c, ack_1^{tcp})$. Sur réception de ce segment par le port TCP correspondant du CMU, un acquittement $ack_2^{tcp}$ est renvoyé vers le sol. Le reste du processus d'acquittement est identique à la première variante. En définitive, seulement trois segments TCP transitent sur l'interface pour un message ACARS transmis, soit $S(B_1,...,B_n)$, $S(ack_c, ack_1^{tcp})$ et $ack_2^{tcp}$.

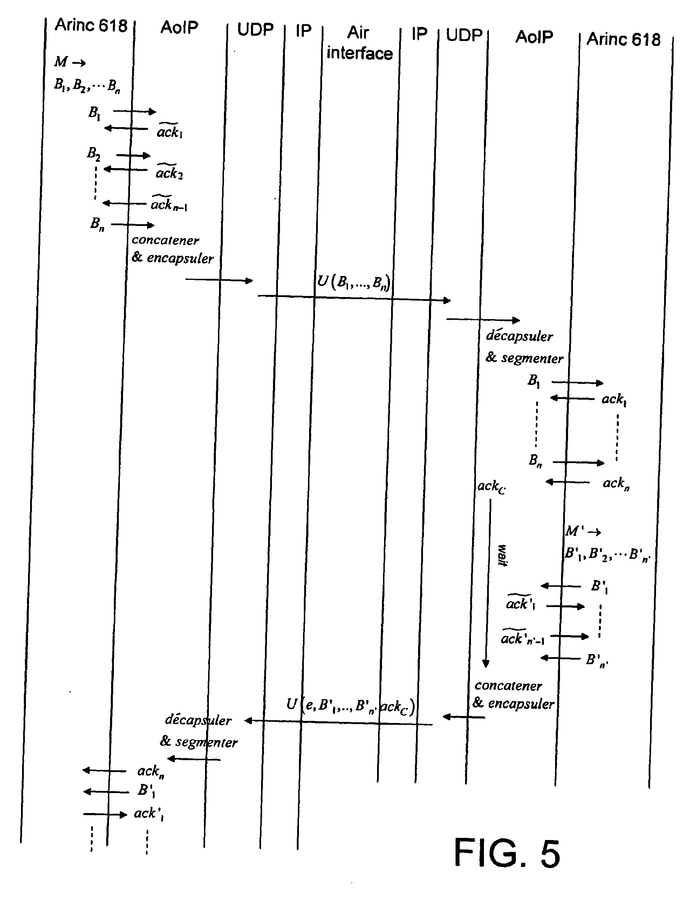

La Fig. 5 illustre une troisième variante où la méthode de transmission des messages ACARS utilise un protocole de transport ne possédant pas de propre mécanisme d'acquittement, par exemple le protocole UDP. On sait que le protocole UDP est un protocole non-orienté connexion qui ne garantit pas le bon acheminement des datagrammes.

L'idée à la base de cette variante est d'attendre l'émission d'un message ACARS sur la voie montante pour renvoyer l'accusé de réception du message qui vient d'être reçu sur la voie descendante. De manière symétrique, on attendra l'émission d'un message sur la voie descendante pour renvoyer l'accusé de réception du message qui vient d'être reçu sur la voie montante. Le cas d'une transmission de message ACARS $M$ sur la voie descendante a été illustré en Fig. 5.

La transmission du message $M$ est effectuée comme déjà décrit en Fig. 4, la couche de transport ayant été ici simplement détaillée. Autrement dit, les blocs $B_1,...,B_n$ sont transmis à la couche AoIP qui les concatène et les encapsule dans un datagramme UDP. Le datagramme UDP, noté $U(B_1,..,B_n)$ est ensuite incorporé de manière classique dans un datagramme IP. A la réception par le destinataire, le datagramme $U(B_1,..,B_n)$ est extrait du datagramme IP et les blocs $B_1,..,B_n$ sont successivement remis par la couche UDP à la couche Arinc 618. Les accusés de réception $ack_1,..,ack_n$ reçus par la couche AoIP sont convertis par cette couche en un accusé de réception composite $ack_C$ qui est mis en attente.

Lorsque le centre de la compagnie au sol transmet un message ACARS $M'$ sur la voie montante, par exemple en réponse au message $M$, l'accusé de réception $ack_C$ est embarqué avec les blocs du message $M'$ dans le datagramme UDP. Plus précisément, le message $M'$ est divisé en blocs $B'_1,..,B'_{n'}$ avec $n'\leq 16$ par la couche Arinc 618. Le bloc $B'_1$ est transmis à la couche AoIP qui lui renvoie un acquittement factice $\widetilde{ack}'_1$. Le processus est répété pour les blocs suivants à l'exception du dernier pour lequel l'acquittement factice n'est pas transmis, comme on déjà vu pour la liaison descendante. Lorsque la couche AoIP est en possession des blocs $B'_1,..,B'_{n'}$ elle vérifie si un accusé de réception est en attente. Si c'est le cas l'accusé de réception est embarqué avec les blocs $B'_1,...,B'_{n'}$ dans le même datagramme UDP, l'embarquement d'un accusé de réception étant éventuellement signalé dans le datagramme par un entête caractéristique.

Avantageusement, un temporisateur est armé avec une temporisation $\tau_{max}$ lorsque les $n$ blocs $B_1,..,B_n$ ont été reçus par la couche AoIP. Si un message $M'$ est à transmettre par la couche AoIP pendant la temporisation $\tau_{max}$, l'accusé de réception $ack_C$ est embarqué avec les blocs du message $M'$ comme décrit précédemment. En revanche, si au terme de la temporisation aucun message $M'$ n'est toujours à transmettre sur la voie montante, l'accusé de réception est alors envoyé au moyen d'un datagramme UDP séparé. La durée de temporisation peut être adaptive et notamment dépendre du taux de remplissage du buffer d'émission de messages ACARS sur la voie descendante. Ainsi, pour un taux de remplissage élevé, la durée $\tau_{max}$ sera choisie relativement faible, de manière à ne pas retarder l'envoi d'un nouveau message par la couche Arinc 618.

Dans le cas illustré en Fig. 5, l'accusé de réception composite unique $ack_C$ est concaténé avec les blocs $B'_1,..,B'_{n'}$ pour être transmis sous la forme d'un datagramme noté $U(e,B'_1,..,B'_{n'},ack_C)$, où e est l'entête précité. Ce datagramme UDP est bien entendu ensuite incorporé dans un datagramme IP qui est routé vers le CMU de l'aéronef. A destination, le datagramme $U(e, B'_1,..,B'_{n'},ack_C)$ est extrait du datagramme IP. La couche AoIP reconnaît alors la présence d'un accusé de réception grâce à la présence de l'entête e. Elle extrait et segmente les blocs $B'_1,..,B'_{n'}$ ainsi que l'acquittement $ack_C$, avant de les remettre à la couche Arinc 618. L'entête e peut également indiquer le taux de remplissage du buffer de messages ACARS sur la voie montante. De manière symétrique à la voie descendante, un temporisateur sera armé dès réception des blocs $B'_1,..,B'_{n'}$ avec une durée de temporisation $\tau'_{max}$. Cette durée dependra du taux de remplissage indiqué dans l'entête. Comme précédemment, elle définit le temps d'attente maximal pour acquitter la réception du message $M'$, l'accusé de réception $ack'_C$ pouvant être transmis par un datagramme UDP $U(e',B_1,...,B_n,ack'_C)$ embarquant un nouveau message sur la voie descendante ou, à défaut, par un datagramme UDP séparé, au terme de la temporisation. Le datagramme $U(e',B'_1,...,B'_{n'},ack'_C)$ comprend avantageusement un entête indiquant l'état du buffer d'émission sur la voie descendante.

En définitive, pour un message ACARS transmis, un seul datagramme transite, en règle générale, sur l'interface air, à savoir $U(e',B_1,..,B_n,ack'_C)$ pour le message sur la voie descendante et $U(e,B'_1,..,B'_n,ack_C)$ pour le message sur la voie montante.

## Revendications

1. Méthode de transmission de messages ACARS sur IP, entre un émetteur et un récepteur, un message ACARS ($M$) émis par une application étant divisé en une pluralité de blocs ($B_1,B_2,\cdots B_n$), **caractérisée en ce que** pour chaque bloc dudit message, à l'exception du dernier, on renvoie localement, au niveau de l'émetteur, un accusé de réception factice

   $(\widetilde{ack_1},\widetilde{ack_2},...,\widetilde{ack_n})$ dudit bloc à ladite application et que, lorsque l'émetteur reçoit du récepteur un message ($D(ack_C)$, $S(ack_C)$, $S(ack_c,ack_1^{tcp})$, $U$ $(e,B'_1,..,B'_n,ack_C)$), indiquant une bonne réception de ladite pluralité des blocs transmis, il génère un accusé de réception $(ack_n)$ du dernier bloc avant de le renvoyer à ladite application.

2. Méthode de transmission selon la revendication 1, **caractérisée en ce** ladite application comprend une couche de protocole Arinc 618, que ledit message ACARS est conforme à cette norme et que l'accusé de réception est transmis à cette couche.

3. Méthode de transmission selon la revendication 2, **caractérisée en ce que** l'émetteur comprend une couche d'adaptation de protocole, dite première couche d'adaptation, entre la couche de protocole Arinc 618 et la couche IP, ladite première couche d'adaptation renvoyant pour chaque bloc d'un message ACARS, à l'exception du dernier, un acquittement factice à la couche de protocole Arinc 618, et lorsqu'elle a reçu de cette couche la totalité des blocs dudit message, les concatène et encapsule les blocs ainsi concaténés dans un premier datagramme IP.

4. Méthode de transmission selon la revendication 3, **caractérisée en ce que** le récepteur comprend une couche d'adaptation de protocole, dite seconde couche d'adaptation, entre la couche de protocole Arinc 618 d'une seconde application et la couche IP, ladite seconde couche d'adaptation étant adaptée à décapsuler et segmenter la charge utile dudit datagramme IP pour récupérer lesdits blocs, puis à fournir les blocs, un par un, à la couche de protocole Arinc 618 de ladite seconde application, un bloc ne lui étant fourni que lorsqu'elle a accusé réception du bloc précédent.

5. Méthode de transmission selon la revendication 4, **caractérisée en ce que** lorsque la seconde couche d'adaptation a reçu la totalité des accusés de réception ($ack_1,ack_2,...,ack_n$) desdits blocs, elle renvoie à l'émetteur, dans un second datagramme IP ($D(ack_C)$), un accusé de réception de la pluralité desdits blocs.

6. Méthode de transmission selon la revendication 2, **caractérisée en ce que** l'émetteur comprend une couche d'adaptation de protocole, dite troisième couche d'adaptation, entre la couche de protocole Arinc 618 et une couche TCP sur IP, ladite troisième couche d'adaptation renvoyant pour chaque bloc d'un message ACARS, à l'exception du dernier, un acquittement factice à la couche de protocole Arinc 618, et lorsqu'elle a reçu de cette couche la totalité des blocs dudit message, les concatène et encapsule les blocs ainsi concaténés dans un premier segment TCP.

7. Méthode de transmission selon la revendication 6, **caractérisée en ce que** le récepteur comprend une couche d'adaptation de protocole, dite quatrième couche d'adaptation, entre la couche de protocole Arinc 618 d'une seconde application et la couche TCP, ladite quatrième couche d'adaptation étant adaptée à décapsuler et segmenter la charge utile dudit premier segment TCP pour récupérer lesdits blocs, puis à fournir les blocs, un par un, à la couche de protocole Arinc 618 de la seconde application, un bloc ne lui étant fourni que lorsqu'elle a accusé réception du bloc précédent.

8. Méthode de transmission selon la revendication 7, **caractérisée en ce que**, lorsque la quatrième couche d'adaptation a reçu la totalité des accusés de réception ($ack_1$, $ack_2$,...,$ack_n$) desdits blocs, elle renvoie à l'émetteur, un second segment TCP ($S(ack_C)$,

   $S(ack_c, ack_1^{tcp})$), contenant un accusé de réception ($ack_C$) de la pluralité desdits blocs ainsi qu'un acquittement du premier segment TCP ($ack_1^{tcp}$).

9. Méthode de transmission selon la revendication 2, **caractérisée en ce que** l'émetteur comprend une couche d'adaptation de protocole, dite cinquième couche d'adaptation, entre la couche de protocole Arinc 618 et une couche UDP sur IP, ladite cinquième couche d'adaptation renvoyant pour chaque bloc d'un message ACARS, à l'exception du dernier, un acquittement factice à la couche de protocole Arinc 618, et lorsqu'elle a reçu de cette couche la totalité des blocs dudit message, les concatène et encapsule les blocs ainsi concaténés dans un premier datagramme UDP.

**10.** Méthode de transmission selon la revendication 9, **caractérisée en ce que** le récepteur comprend une couche d'adaptation de protocole, dite sixième couche d'adaptation, entre la couche de protocole Arinc 618 d'une seconde application et la couche UDP, ladite sixième couche d'adaptation étant adaptée à décapsuler et segmenter la charge utile dudit premier datagramme UDP pour récupérer lesdits blocs, puis à fournir les blocs, un par un, à la couche de protocole Arinc 618 de la seconde application , un bloc ne lui étant fourni que lorsqu'elle a accusé réception du bloc précédent et **en ce que**, lorsque la sixième couche d'adaptation a reçu la totalité des accusés de réception ($ack_1$, $ack_2$,...,$ack_n$) desdits blocs, elle attend l'envoi d'un second message ACARS ($M'$) à destination de l'émetteur, l'accusé de réception ($ack_C$) de la pluralité desdits blocs étant alors concaténé aux blocs du second message avant d'être placé dans un second datagramme UDP.

**Claims**

**1.** A method for transmitting ACARS messages over IP, between a transmitter and a receiver, an ACARS message ($M$) transmitted by an application being divided into a plurality of blocks ($B_1, B_2, \cdots B_n$), **characterized in that** for each block of said message, except for the last, a dummy acknowledgment of receipt ($\widetilde{ack}_1, \widetilde{ack}_2, ..., \widetilde{ack}_n$) of said block is locally sent back at the transmitter to said application and that, when the transmitter receives from the receiver a message ($D(ack_C)$, $S(ack_C)$, $S(ack_c, ack_1^{tcp})$, $U(e, B'_1, .., B'_n, ack_C)$), indicating proper reception of said plurality of transmitted blocks, it generates an acknowledgment of receipt ($ack_n$) of the last block before sending it back to said application.

**2.** The transmission method according to claim 1, **characterized in that** said application comprises an Arinc 618 protocol layer, that said ACARS message complies with this standard and that the acknowledgment of receipt is transmitted to this layer.

**3.** The transmission method according to claim 2, **characterized in that** the transmitter comprises a protocol adaptation layer, referred to as first adaptation layer, between the Arinc 618 protocol layer and the IP layer, said first adaptation layer sending back for each block of an ACARS message, except for the last, a dummy acknowledgment to the Arinc 618 protocol layer, and when it has received from this layer the totality of blocks of said message, it concatenates them and encapsulates the thereby concatenated blocks in a first IP datagram.

**4.** The transmission method according to claim 3, **characterized in that** the receiver comprises a protocol adaptation layer, referred to as second adaptation layer, between the Arinc 618 protocol layer of a second application and the IP layer, said second adaptation layer being adapted for decapsulating and segmenting the useful load of said IP datagram in order to recover said blocks, and then providing the blocks, one by one, to the Arinc 618 protocol layer of said second application, a block being provided to it only when it has acknowledged receipt of the previous block.

**5.** The transmission method according to claim 4, **characterized in that** when the second adaptation layer has received the totality of the acknowledgments of receipt ($ack_1$, $ack_2$,..., $ack_n$) of said blocks, it sends back to the transmitter in a second IP datagram ($D(ack_C)$), an acknowledgment of receipt of the plurality of said blocks.

**6.** The transmission method according to claim 2, **characterized in that** the transmitter comprises a protocol adaptation layer, referred to as third adaptation layer, between the Arinc 618 protocol layer and a TCP layer over IP, said third adaptation layer sending back for each block an ACARS message, except for the last, a dummy acknowledgment to the Arinc 618 protocol layer, and when it has received from this layer the totality of the blocks of said message, it concatenates them and encapsulates the thereby concatenated blocks in a first TCP segment.

**7.** The transmission method according to claim 6, **characterized in that** the receiver comprises a protocol adaptation layer, referred to as fourth adaptation layer, between the Arinc 618 protocol layer of a second application and the TCP layer, said fourth adaptation layer being adapted for decapsulating and segmenting the useful load of said first TCP segment in order to recover said blocks, and then providing the blocks one by one to the Arinc 618 protocol layer of the second application, a block being provided to it only when it has acknowledged receipt of the previous block.

**8.** The transmission method according to claim 7, **characterized in that**, when the fourth adaptation layer has received the totality of the acknowledgments of receipt ($ack_1, ack_2, ..., ack_n$) of said blocks, it sends back to the transmitter, a second TCP segment ($S(ack_C)$, $S(ack_c, ack_1^{tcp})$), containing an acknowledgment of receipt ($ack_C$) of the plurality of said blocks as well as acknowledgment of the first TCP segment ($ack_1^{tcp}$).

9. The transmission method according to claim 2, **characterized in that** the transmitter comprises a protocol adaptation layer, referred to as fifth adaptation layer, between the Arinc 618 protocol layer and a UDP layer over IP, said fifth adaptation layer sending back for each block of an ACARS message, except for the last, a dummy acknowledgment to the Arinc 618 protocol layer, and when it has received from this layer the totality of the blocks of said message, it concatenates them and encapsulates the thereby concatenated blocks in a first UDP datagram.

10. The transmission method according to claim 9, **characterized in that** the receiver comprises a protocol adaptation layer, referred to as sixth adaptation layer, between Arinc 618 protocol layer of a second application and the UDP layer, said sixth adaptation layer being adapted for decapsulating and segmenting the payload of said first UDp datagram in order to recover said blocks, and then providing the blocks, one by one, to the Arinc 618 protocol layer of the second application, a block being provided to it only when it has acknowledged receipt of the previous block and **in that**, when the sixth adaptation layer has received the totality of the acknowledgments of receipt ($ack_1$, $ack_2$,..., $ack_n$) of said blocks, it awaits the sending of a second ACARS message ($M'$) to the transmitter, the acknowledgment of receipt ($ack_C$) of the plurality of said blocks being then concatenated to the blocks of the second message before being placed in a second UDP datagram.

**Patentansprüche**

1. Verfahren zur Übertragung von ACARS-Nachrichten auf IP zwischen einem Sender und einem Empfänger, wobei eine ACARS-Nachricht (M), die von einer Anwendung ausgesandt wird, in eine Mehrzahl von Blöcken ($B_1$, $B_2$, ... $B_n$) unterteilt ist, **dadurch gekennzeichnet, dass** man für jeden Block der Nachricht mit Ausnahme des letzten lokal im Bereich des Senders eine unechte Empfangsbescheinigung ($\widetilde{ack}_1$, $\widetilde{ack}_2$,... $\widetilde{ack}_n$) des Blocks an die Anwendung absendet und, wenn der Sender vom Empfänger eine Nachricht (D($ack_C$), S($ack_C$), S($ack_C$, $ack_1^{tcp}$), U(e, $B'_1$,..., $B'_n$, $ack_C$)), erhält, die einen guten Empfang der Mehrzahl von übertragenen Blöcken anzeigt, er eine Empfangsbescheinigung ($ack_n$) des letzten Blocks vor der Absendung an die Anwendung erzeugt.

2. Verfahren zur Übertragung nach Anspruch 1, **dadurch gekennzeichnet, dass** die Anwendung eine Arinc 618-Protokollschicht umfasst, dass die ACARS-Nachricht mit dieser Norm konform ist und dass die Empfangsbescheinigung an diese Schicht übertragen wird.

3. Verfahren zur Übertragung nach Anspruch 2, **dadurch gekennzeichnet, dass** der Sender eine Protokollanpassungsschicht, genannt erste Anpassungsschicht, zwischen der Arinc 618-Protokollschicht und der IP-Schicht umfasst, wobei die erste Anpassungsschicht für jeden Block einer ACARS-Nachricht mit Ausnahme des letzten, eine unechte Bestätigung an die Arinc 618-Protokollschicht absendet, und wenn sie von dieser Schicht die Gesamtheit der Blöcke der Nachricht empfangen hat, sie verkettet und die derart verketteten Blökke in einem ersten IP-Datagramm einkapselt.

4. Verfahren zur Übertragung nach Anspruch 3, **dadurch gekennzeichnet, dass** der Empfänger eine Protokollanpassungsschicht, genannt zweite Anpassungsschicht, zwischen der Arinc 618-Protokollschicht einer zweiten Anwendung und der IP-Schicht umfasst, wobei die zweite Anpassungsschicht dazu ausgelegt ist, die Nutzlast des IP-Datagramms zu entkapseln und segmentieren, um die Blöcke wieder herzustellen und dann die Blöcke einzeln an die Arinc 618-Protokollschicht der zweiten Anwendung zu liefern, wobei ein Block ihr nur geliefert wird, wenn sie den Empfang des vorhergehenden Blocks bestätigt hat.

5. Verfahren zur Übertragung nach Anspruch 4, **dadurch gekennzeichnet, dass** dann, wenn die zweite Anpassungsschicht die Gesamtheit der Empfangsbescheinigungen ($ack_1$, $ack_2$,...$ack_n$) der Blökke empfangen hat, sie an den Sender in einem zweiten IP-Datagramm (D($ack_C$)) eine Empfangsbescheinigung der Mehrzahl der Blöcke absendet.

6. Verfahren zur Übertragung nach Anspruch 2, **dadurch gekennzeichnet, dass** der Sender eine Protokollanpassungsschicht, genannt dritte Anpassungsschicht, zwischen der Arinc 618-Protokollschicht und einer Schicht TCP auf IP umfasst, wobei die dritte Anpassungsschicht für jeden Block einer ACARS-Nachricht mit Ausnahme des letzten eine unechte Bestätigung an die Arinc 618-Protokollschicht absendet und, wenn sie von dieser Schicht die Gesamtheit der Blöcke der Nachricht empfangen hat, sie verkettet und die derart verketteten Blöcke in einem ersten TCP-Segment einkapselt.

7. Verfahren zur Übertragung nach Anspruch 6, **dadurch gekennzeichnet, dass** der Empfänger eine Protokollanpassungsschicht, genannt vierte Anpassungsschicht, zwischen der Arinc 618-Protokollschicht einer zweiten Anwendung und der TCP-Schicht umfasst, wobei die vierte Anpassungsschicht dazu ausgelegt ist, die Nutzlast des ersten TCP-Segments zu entkapseln und segmentieren, um die Blöcke wieder herzustellen, und dann die Blöcke einzeln an die Arinc 618-Protokollschicht der zweiten Anwendung zu liefern, wobei ein Block ihr nur geliefert wird, wenn sie den Empfang des vorhergehenden Blocks bestätigt hat.

8. Verfahren zur Übertragung nach Anspruch 7, **dadurch gekennzeichnet, dass** dann, wenn die vierte Anpassungsschicht die Gesamtheit der Empfangsbescheinigungen ($ack_1$, $ack_2$,...$ack_n$) der Blöcke empfangen hat, sie an den Sender ein zweites TCP-Segment ($S(ack_C)$, $S(ack_C, ack_1^{tcp})$) absendet, das eine Empfangsbescheinigung ($ack_C$) der Mehrzahl der Blöcke sowie eine Bestätigung des ersten TCP-Segments ($ack_1^{tcp}$) enthält.

9. Verfahren zur Übertragung nach Anspruch 2, **dadurch gekennzeichnet, dass** der Sender eine Protokollanpassungsschicht, genannt fünfte Anpassungsschicht, zwischen der Arinc 618-Protokollschicht und einer Schicht UDP auf IP umfasst, wobei die fünfte Anpassungsschicht für jeden Block einer ACARS-Nachricht mit Ausnahme des letzten eine unechte Bestätigung an die Arinc 618-Protokollschicht absendet, und wenn sie von dieser Schicht die Gesamtheit der Blöcke der Nachricht empfangen hat, sie verkettet und die derart verketteten Blöcke in einem ersten UDP-Datagramm einkapselt.

10. Verfahren zur Übertragung nach Anspruch 9, **dadurch gekennzeichnet, dass** der Empfänger eine Protokollanpassungsschicht, genannt sechste Anpassungsschicht, zwischen der Arinc 618-Protokollschicht einer zweiten Anwendung und der UDP-Schicht umfasst, wobei die sechste Anpassungsschicht dazu ausgelegt ist, die Nutzlast des ersten UDP-Datagramms zu entkapseln und segmentieren, um die Blöcke wieder herzustellen, und dann die Blöcke einzeln an die Arinc 618-Protokollschicht der zweiten Anwendung zu liefern, wobei ein Block ihr nur geliefert wird, wenn sie den Empfang des vorhergehenden Blocks bestätigt hat, und dass dann, wenn die sechste Anpassungsschicht die Gesamtheit der Empfangsbescheinigungen ($ack_1$, $ack_2$,...$ack_n$) der Blöcke empfangen hat, sie die Absendung einer zweiten ACARS-Nachricht (M') mit Bestimmung für den Sender abwartet, wobei die Empfangsbescheinigung ($ack_C$) der Mehrzahl der Blöcke dann mit den Blöcken der zweiten Nachricht vor der Platzierung in einem zweiten UDP Datagramm verkettet wird.

| Arinc 618 | AoIP | IP | Air interface | IP | AoIP | Arinc 618 |
|---|---|---|---|---|---|---|

$M \rightarrow$
$B_1, B_2, \cdots B_n$

$B_1 \longrightarrow$

*encapsuler*

$\rightarrow I(B_1)$

$\rightarrow I(B_1)$

*décapsuler*

$\longrightarrow B_1$

$ack_1$

$B_2 \longrightarrow$

*encapsuler*

$\rightarrow I(B_2)$

$B_n \longrightarrow$

*encapsuler*

$\rightarrow I(B_n)$

$\rightarrow I(B_n)$

*décapsuler*

$\longrightarrow B_n$

$ack_n$

# FIG. 1

FIG. 2

| Arinc 618 | AoIP | IP | Air interface | IP | AoIP | Arinc 618 |
|---|---|---|---|---|---|---|

$M \rightarrow$
$B_1, B_2, \cdots B_n$

$B_1 \longrightarrow$
$\longleftarrow \widetilde{ack}_1$

$B_2 \longrightarrow$
$\longleftarrow \widetilde{ack}_2$

$\longleftarrow \widetilde{ack}_{n-1}$

$B_n \longrightarrow$

*concatener*
*& encapsuler*

$D(B_1,...,B_n)$

*décapsuler*
*& segmenter*

$B_1 \longrightarrow$
$\longleftarrow ack_1$

$B_n \longrightarrow$
$\longleftarrow ack_n$

$\longleftarrow ack_C$

$D(ack_C)$

$\longleftarrow ack_C$

$\longleftarrow ack_n$

# FIG. 3

| Arinc 618 | AoIP | TCP | IP | Air interface | IP | TCP | AoIP | Arinc 618 |
|---|---|---|---|---|---|---|---|---|

$M \rightarrow$
$B_1, B_2, \cdots B_n$

$B_1 \longrightarrow$

$\longleftarrow \widetilde{ack}_1$

$B_2 \longrightarrow$

$\longleftarrow \widetilde{ack}_2$

$\vdots$

$\longleftarrow \widetilde{ack}_{n-1}$

$B_n \longrightarrow$

*concatener & encapsuler*

$\longrightarrow$

$S(B_1, ..., B_n)$
$\longrightarrow$

$ack_1^{tcp}$
$\longleftarrow$

$\longrightarrow$

*décapsuler & segmenter*

$B_1 \longrightarrow$

$\longleftarrow ack_1$

$\vdots \qquad \vdots$

$B_n \longrightarrow$

$\longleftarrow ack_n$

$ack_C \longleftarrow$

$S(ack_C)$
$\longleftarrow$

$ack_2^{tcp}$
$\longrightarrow$

$ack_C \longleftarrow$

$ack_n \longleftarrow$

# FIG. 4A

FIG. 4B

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006026632 A